# FASCICULE DE BREVET EUROPEEN

(11) **EP 3 272 616 B1**
(45) Date de publication et mention de la délivrance du brevet: **01.09.2021**
(21) Numéro de dépôt: 17181592.1
(22) Date de dépôt: 17.07.2017
(51) Int. Cl.: B61D 17/08, B61D 17/10, B61D 17/12

(54) **PROCÉDÉ D'ASSEMBLAGE DE VÉHICULE FERROVIAIRE**
VERFAHREN ZUM ZUSAMMENBAU EINES SCHIENENFAHRZEUGS
ASSEMBLY PROCESS OF A CARBODYSHELL

(30) Priorité: 19.07.2016 FR 1656873
(43) Date de publication de la demande: 24.01.2018
(73) Titulaire: ALSTOM Transport Technologies, 93400 Saint-Ouen (FR)
(72) Inventeur: ROLL, Stephane, 67170 Brumath (FR); TRITZ, Bernard, 67110 Niederbronn-les-Bains (FR)
(74) Mandataire: Lavoix

(56) Documents cités:
- EP-A1- 1 043 206
- EP-A1- 2 172 382
- WO-A1-02/058981
- CN-U- 203 902 554
- DE-A1- 19 606 792
- FR-A1- 2 706 406
- FR-A1- 2 907 040

## Description

La présente invention concerne un procédé de fabrication d'une caisse de véhicule ferroviaire selon le préambule de la revendication 1.

Un véhicule ferroviaire comprend une caisse métallique portée par des bogies. Les bogies portent les roues et les moteurs électriques chargés de la propulsion du véhicule.

La caisse métallique est généralement composée de plusieurs parties assemblées par boulonnage ou par soudage, le soudage permettant de réduire de manière notable la masse de la caisse ainsi que son coût de fabrication.

La caisse du véhicule ferroviaire reçoit de plus un certain nombre d'équipements, dépendant de l'utilisation prévue du véhicule, comme des vitres, des câbles électriques, des sièges ou des éléments de parement intérieurs.

De manière connue, l'étape de garnissage du véhicule ferroviaire a lieu après l'assemblage de la caisse, et doit donc être effectuée depuis l'intérieur de la caisse, ce qui réduit les possibilités d'accès et impose des contraintes pour son installation sur une chaine de montage. Les possibilités d'automatisation partielle du garnissage sont également réduites par l'accès difficile à l'intérieur de la caisse.

L'extérieur de la caisse métallique assemblée reçoit quant à lui un revêtement externe jouant un rôle de protection de la caisse contre la corrosion et améliorant l'esthétique du véhicule.

Un exemple de procédé de fabrication d'une caisse de véhicule ferroviaire est décrite dans le document DE 196 06 792 A1 et dans le document EP 1 043 206 A1.

Un but de l'invention est de permettre le garnissage de la caisse et l'application du revêtement extérieur de manière simplifiée au cours du processus d'assemblage.

A cet effet, l'invention a pour objet un procédé selon la revendication 1 .Selon des modes de réalisation particuliers, le procédé selon l'invention comprend l'une ou plusieurs des caractéristiques des revendications 2 à 7, prises isolément ou selon toute combinaison techniquement possible.

L'invention sera mieux comprise à la lecture de la description qui va suivre, donnée uniquement à titre d'exemple et faite en référence aux dessins annexés, parmi lesquels :
- la figure 1 est une vue schématique en perspective de l'assemblage des différentes parties de la caisse lors du procédé selon l'invention ;
- les figures 2, 3 et 4 sont des vues en coupe partielle des étapes de l'assemblage du bas de caisse à l'une des parois latérales ; et
- les figures 5, 6 et 7 sont des vues en coupe partielle des étapes de l'assemblage du pavillon à l'une des parois latérales.

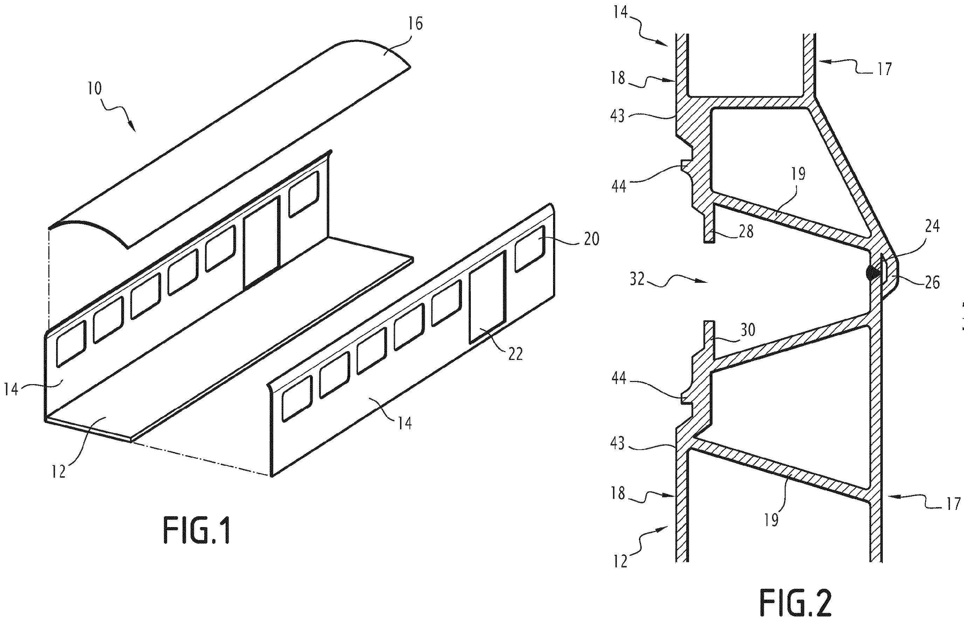

Le procédé d'assemblage d'une caisse métallique 10 de véhicule ferroviaire comprend une étape d'assemblage de quatre éléments constitutifs préalablement fournis, représenté schématiquement sur la figure 1.

Les éléments constitutifs de la caisse métallique 10 comprennent un bas de caisse 12, deux parois latérales 14 et un pavillon supérieur 16. L'assemblage des deux parois latérales 14 aux deux structures transverses, qui comprennent le bas de caisse 12 et le pavillon 16, forme un « tube » destiné à être ultérieurement fermé à ses deux extrémités par des parois transversales d'extrémité boulonnées.

Le bas de caisse 12, les parois latérales 14 et le pavillon supérieur 16 sont des structures en aluminium comprenant une face interne 17 et une face externe 18 reliées par des traverses 19, comme représenté sur les figures 2 à 7. De telles structures sont généralement fabriquées par extrusion.

Selon l'invention, le bas de caisse 12, les deux parois latérales 14 et le pavillon 16 sont munis d'équipements avant leur assemblage. Ces équipements comprennent, entre autre, des vitres 20 et des portes 22 installées dans des ouvertures présentes dans les parois latérales 14. Les équipements comprennent également des équipements électroniques et des câbles électriques destinés à connecter les différents véhicules du train. Les équipements comprennent en outre des éléments de parement des faces internes 17, ainsi qu'un revêtement de sol.

En plus de l'installation d'équipement, et avant l'assemblage, un revêtement extérieur définitif est appliqué sur les faces externes 18 du bas de caisse 12, des parois latérales 14 et du pavillon 16. Ce revêtement extérieur définitif comprend par exemple une ou plusieurs couches de peinture contribuant à l'esthétique du véhicule et à la protection de la caisse 10 contre la corrosion.

L'assemblage du bas de caisse 12, des deux faces latérales 14 et du pavillon supérieur 16 est fait par soudage longitudinal le long de zones de contact entre les éléments. Plus précisément, l'assemblage comprend d'abord la réalisation de deux raccords bas entre le bas de caisse 12 et chaque paroi latérale 14 et ensuite la réalisation de deux raccords hauts entre chaque paroi latérale 14 et le pavillon supérieur 16.

La réalisation de chaque raccord bas est faite suivant un procédé en trois étapes, représenté sur les figures 2 à 4.

Dans une première étape représentée sur la figure 2, le bas de caisse 12 et la paroi latérale 14 sont mis en contact par leurs faces internes 17 respectives. Les faces internes 17 du bas de caisse 12 et de la paroi latérale 14 sont chanfreinées sur les surfaces mises en contact, et coopèrent pour former une encoche en V ouverte vers l'extérieur, dans laquelle est réalisée une première soudure 24.

Avantageusement, une flèche 26 présente sur la paroi latérale 14 vient en appui contre la face interne 17 du bas de caisse 12 pour aider à l'alignement des deux faces internes 17. En variante, la flèche 26 est portée par le bas de caisse 12 et vient en appui sur la face interne 17 de la paroi latérale 14.

La soudure 24 est réalisée par un procédé de soudage à l'arc électrique sous un flux de gaz inerte (ou soudage MIG, pour « Metal Inert Gas ») utilisant une torche de soudage munie d'une électrode fusible.

Avantageusement, le soudage est réalisé de manière automatisée sur une ligne de montage.

Un bord supérieur 28 de la face externe 18 de la paroi latérale 14 et un bord inférieur 30 de la face externe 18 du bas de caisse 12 définissent une ouverture 32. La torche de soudage utilisée pour réaliser la première soudure 24 accède au point de contact entre le bas de caisse 12 et la paroi latérale 14 à travers l'ouverture 32 pour y réaliser la première soudure 24. L'ouverture 32 a une largeur supérieure à 50 mm, avantageusement l'ouverture 32 a une largeur sensiblement égale à 60 mm, pour permettre le passage de la torche de soudage.

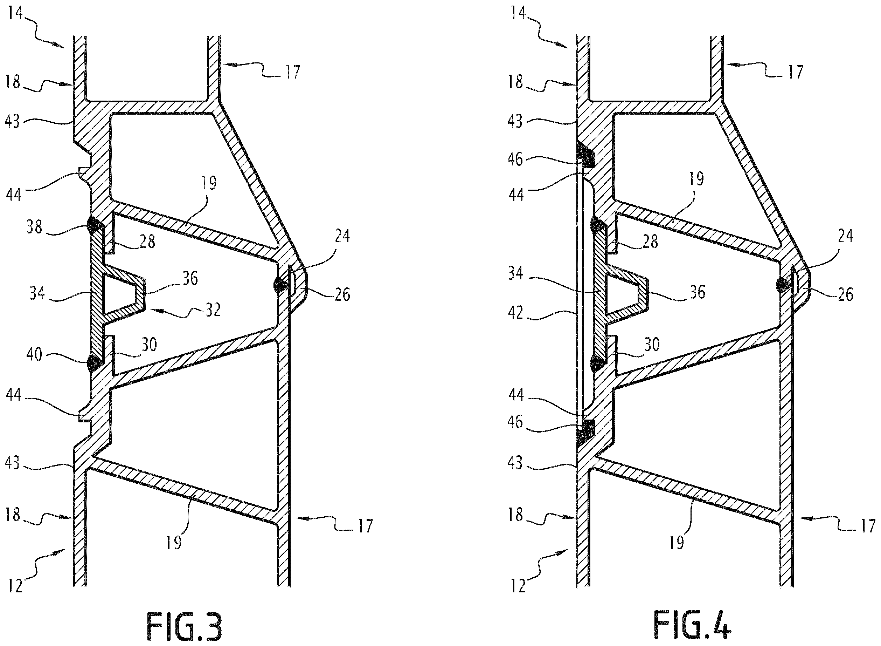

La deuxième étape est représentée sur la figure 3. Un élément intercalaire 34 est positionné en appui sur les bords 28, 30 pour fermer l'ouverture 32. L'élément intercalaire 34 est une plaque métallique munie d'une superstructure 36 de section trapézoïdale, la superstructure 36 venant s'insérer dans l'ouverture 32.

Une soudure haute 38 est réalisée entre le bord supérieur 28 et un bord supérieur de l'élément intercalaire 34, et une soudure basse 40 est réalisée entre le bord inférieur 30 et un bord inférieur de l'élément intercalaire 34.

La troisième étape est représentée sur la figure 4. Un élément de parement 42 extérieur est placé au-dessus de l'élément intercalaire 34, entre deux zones exposées 43. L'élément de parement est par exemple un bandeau rectangulaire sensiblement plan, en plastique. Les zones exposées 43 sont des parties sensiblement planes des faces externes 18 du bas de caisse 12 et de la paroi latérale 14 qui ne sont pas couvertes par l'élément de parement 42.

L'élément de parement 42 est placé en appui sur deux saillies 44 situées sur les faces externes 18 du bas de caisse 12 pour l'une et de la paroi latérale 14 pour l'autre. L'élément de parement 42 est fixé au moyen d'une colle introduite dans deux rainures 46 situées entre les saillies 44 et les zones exposées 43.

Un enduit de parement est ensuite ajouté pour combler de manière lisse et continue l'espaces résiduel entre chaque bord de l'élément de parement 42 et la zone exposée 43 voisine.

Selon l'invention, la distance séparant la soudure haute 38 ainsi que la soudure basse 40 de la plus proche zone exposée 43 respective est supérieure à 30 mm, avantageusement supérieure à 35 mm.

Cette distance minimale entre la zone exposée 43 et la soudure 38, 40 permet de limiter la température de la zone exposée au cours du soudage. Notamment, la température de la zone exposée est maintenue en dessous de la température d'endommagement du revêtement extérieur définitif, par exemple en dessous de 90°.

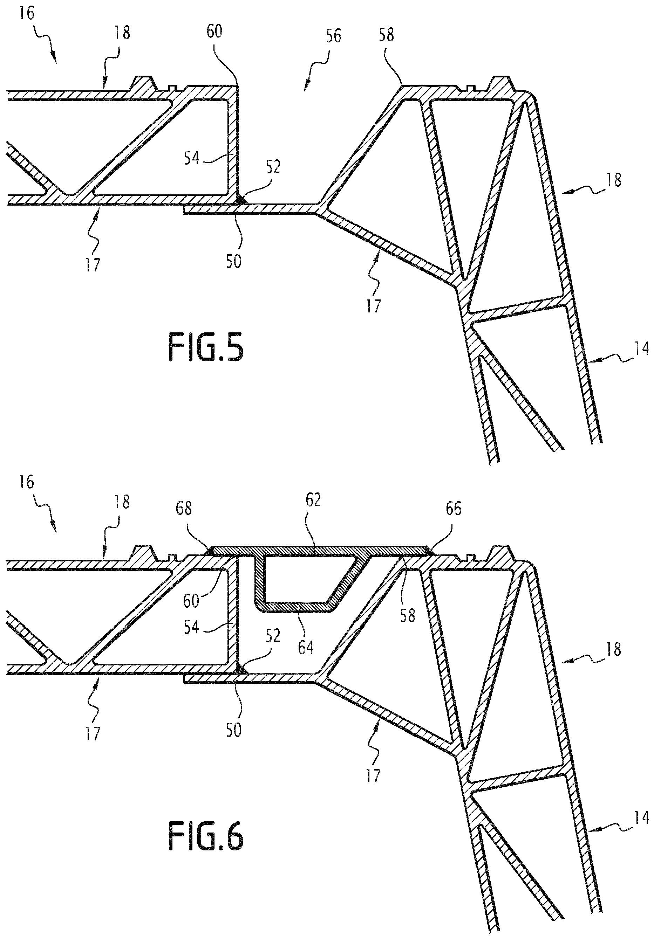

Les figures 5 à 7 décrivent les étapes du raccord haut du pavillon 16 aux parois latérales 14. Le procédé de raccord haut est sensiblement similaire à celui de raccord bas précédemment décrit, avec les différences décrites ci-dessous.

La face interne 17 de la paroi latérale 14 présente un prolongement 50 sur lequel le pavillon 16 est disposé en appui sur sa face interne 17, comme représenté sur la figure 5.

Une première soudure 52 est réalisée dans un espace en angle droit formé par le prolongement 50 et une traverse d'extrémité 54 du pavillon 16. Le procédé de soudage est identique à celui précédemment décrit, et la torche de soudage accède au point de soudage à travers une ouverture 56 entre un bord 58 de la paroi latérale 14 et un bord 60 du pavillon 16.

L'ouverture 56 a une largeur supérieure à 50 mm, avantageusement supérieure à 60 mm, pour permettre le passage de la torche de soudage.

Comme représenté sur la figure 6, un élément intercalaire 62 est positionné en appui sur le bord 58 de la paroi latérale 14 et sur le bord 60 du pavillon 16. L'élément intercalaire 56 est une plaque métallique qui ferme l'ouverture 56, munie d'une superstructure trapézoïdale 64 qui pénètre dans l'ouverture 56.

Une soudure latérale 66 est réalisée dans un espace en angle droit entre l'élément intercalaire 62 et le bord 58 de la paroi latérale 14. Une soudure supérieure 68 est de même réalisée dans un espace en angle droit entre l'élément intercalaire 62 et le bord 60 du pavillon supérieur 16.

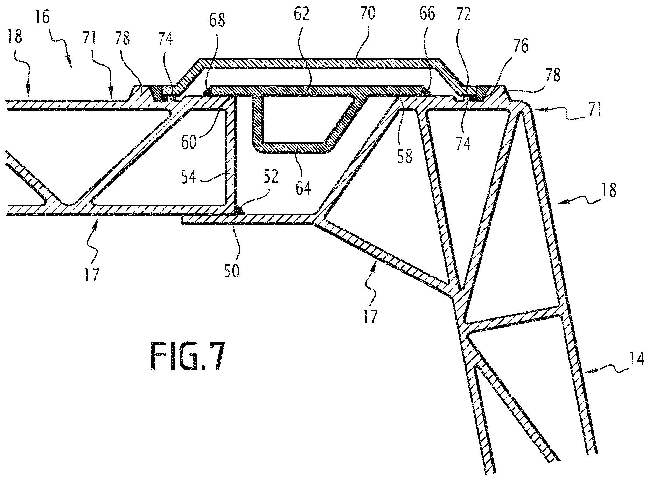

Comme représenté sur le figure 7, la troisième étape du procédé comprend le positionnement d'un élément de parement ponté 70 au-dessus de l'élément intercalaire 62 entre deux zones exposées 71. L'élément de parement ponté 70 est un bandeau en plastique dont la section présente deux pattes 72 qui dépassent d'une plaque de base rectangulaire. Les deux pattes 72 sont positionnées en appui sur deux nervures 74 situées sur la face latérale 14 pour l'une et le pavillon supérieur 16, extérieurement par rapport aux soudures 66, 68.

L'élément de parement ponté 70 est fixé aux nervures 72 par une colle introduite dans des rainures 76 situées sur la face latérale 14 et le pavillon 16, entre les nervures 74 et des rails 78 située sur les zones exposées 71 de la paroi latérale 14 et du pavillon 16, extérieurement par rapport aux nervures 72.

Comme dans le raccord bas, les espaces résiduels dans les rainures 76 entre les pattes 72 et les rails 78, après le collage de l'élément de parement ponté 70, sont comblés de manière lisse avec un enduit de parement.

Ici encore, distance séparant la soudure latérale 66 ainsi que la soudure supérieure 68 de la plus proche zone exposée 71 respective est supérieure à 30 mm, avantageusement supérieure à 35 mm.

Un avantage du procédé de fabrication d'une caisse selon l'invention est de mettre en œuvre des moyens de fixation simples à fabriquer. Ces moyens de fixations simples sont adaptés pour permettre l'assemblage des éléments de la caisse avec un conformateur simplifié par rapport à des procédés usuels.

Seuls des équipements traditionnels de levage comme des ponts sont nécessaires avec des rails de soudage pour les liaisons des sous-ensembles.

Ceci permet un gain de place significatif puisque le nombre de conformateurs nécessaires par année et par matériel fabriqué selon des procédés classiques peut vite nécessiter de très grandes surfaces d'entreposages.

De plus, le cycle de fabrication et la surface nécessaire à la mise en œuvre du procédé sont réduits par rapport à un cycle de fabrication avec un conformateur classique.

De plus, le procédé selon l'invention ne nécessite que de petites chambres de peinture ou de corindonnage puisque seules de petites pièces sont manipulées.

## Revendications

1. Procédé de fabrication d'une caisse (10) de véhicule ferroviaire, comprenant les étapes de :
- fourniture de deux faces latérales (14) et d'une structure transverse choisie parmi un pavillon supérieur (16) et un bas de caisse (12) ;
- application d'un revêtement de surface extérieur définitif sur les deux faces latérales (14) et la structure transverse (12, 16) ;
- soudage de la structure transverse (12, 16) aux deux faces latérales (14) ;
chaque soudage de chaque face latérale (14) à la structure transverse (12, 16) comprenant les étapes suivantes :
- réalisation d'une première soudure (24, 52) directement entre la face latérale (14) et la structure transverse (12, 16),
- positionnement d'un élément intercalaire (34, 62), présentant deux bords, entre la face latérale (14) et la structure transverse (12, 16), par-dessus la première soudure (34, 62), et
- réalisation de deux soudures complémentaires (38, 40, 66, 68), d'une part entre la face latérale (14) et un bord de l'élément intercalaire (34, 62) et d'autre part entre la structure transverse (12, 16) et l'autre bord de l'élément intercalaire (34, 62),
**caractérisé en ce que** l'étape d'application du revêtement de surface extérieur définitif sur les deux faces latérales (14) et la structure transverse (12, 16) isolées est effectuée avant l'étape de soudage, le procédé comprenant une étape de collage d'un élément de parement (42, 70) recouvrant les deux soudures complémentaires (38, 40, 66, 68) et débordant de part et d'autre des deux soudures complémentaires (38, 40, 66, 68), l'élément de parement (42, 70) laissant deux zones (43, 71) exposées sur les faces externes (18), situées de part et d'autre des deux soudures complémentaires (38, 40, 66, 68).

2. Procédé selon la revendication 1, dans lequel les faces latérales (14) et la structure transverse (12, 16) présentent une face interne (17) et une face externe (18), l'étape de soudage étant effectuée uniquement depuis le côté des faces externes (18).

3. Procédé selon l'une quelconque des revendications 1 et 2, dans lequel, lors de l'étape de soudage, un bord (28, 58) de l'une des faces latérales (14) et un bord (30, 60) de la structure transverse (12, 16) sont positionnés de façon à définir une ouverture (32, 56), l'ouverture (32, 56) permettant l'accès depuis l'extérieur de la caisse (10) à un point de contact entre la structure transverse (12, 16) et la face latérale (14) pour la réalisation de la première soudure (24, 52).

4. Procédé selon l'une quelconque des revendications précédentes, dans lequel la distance entre chaque zone exposée (43, 71) et chaque soudure complémentaire (38, 40, 66, 68) est supérieure à 30 mm.

5. Procédé selon l'une quelconque des revendications précédentes, comprenant une étape d'assemblage d'au moins un équipement choisi dans le groupe consistant en une vitre, un élément de parement, et un câble électrique, sur au moins l'un des deux faces latérales (14) et de la structure transverse (12, 16) isolé, l'étape de montage de chaque équipement étant effectuée avant l'étape de soudage.

6. Procédé selon l'une quelconque des revendications précédentes, dans lequel l'étape de soudage est effectuée de manière automatisée.

7. Procédé selon l'une quelconque des revendications précédentes, dans lequel lors de l'étape de fourniture, un pavillon supérieur (16) et un bas de caisse (12) sont fournis et dans lequel les étapes d'application et de soudage sont appliquées d'abord au bas de caisse (12) puis ensuite au pavillon supérieur (16).

## Patentansprüche

1. Verfahren zur Herstellung eines Wagenkastens eines Schienenfahrzeugs (10), das die folgenden Schritte umfasst:
- Bereitstellen von zwei Seitenflächen (14) und einer Querstruktur, ausgewählt aus einem Wagenoberteil (16) und einem Wagenunterteil (12);
- Aufbringen einer Außenflächen-Endbeschichtung auf die beiden Seitenflächen (14) und die Querstruktur (12,16);
- Verschweißen der Querstruktur (12, 16) mit den beiden Seitenflächen (14);
wobei jedes Schweißen jeder Seitenfläche (14) an die Querstruktur (12, 16) die folgenden Schritte umfasst:
- Herstellen einer ersten Schweißnaht (24, 52) direkt zwischen der Seitenfläche (14) und der Querstruktur (12,16),
- Positionieren eines Zwischenelementes (34, 62), das zwei Ränder aufweist, zwischen die Seitenfläche (14) und die Querstruktur (12, 16) über die erste Schweißnaht (34, 62), und
- Herstellen von zwei komplementären Schweißnähten (38, 40, 66, 68), einerseits zwischen der Seitenfläche (14) und einem Rand des Zwischenelements (34, 62) und andererseits zwischen der Querstruktur (12, 16) und dem anderen Rand des Zwischenelements (34, 62),
**dadurch gekennzeichnet, dass** der Schritt des Aufbringens der Außenflächen-Endbeschichtung einzeln auf die beiden Seitenflächen (14) und die Querstruktur (12, 16) vor dem Schritt des Schweißens durchgeführt wird, wobei das Verfahren einen Schritt des Aufklebens eines Verkleidungselements (42, 70) umfasst, das die beiden komplementären Schweißnähte (38, 40, 66, 68) bedeckt und auf beiden Seiten der beiden komplementären Schweißnähte (38, 40, 66, 68) übersteht, wobei das Verkleidungselement (42, 70) zwei Bereiche (43, 71) auf den Außenflächen (18) freilässt, die auf beiden Seiten der beiden komplementären Schweißnähte (38, 40, 66, 68) liegen.

2. Verfahren nach Anspruch 1, bei dem die Seitenflächen (14) und die Querstruktur (12,16) eine Innenfläche (17) und eine Außenfläche (18) aufweisen, wobei der Schritt des Schweißens nur von der Seite der Außenflächen (18) durchgeführt wird.

3. Verfahren nach einem beliebigen der Ansprüche 1 und 2, bei dem während des Schritts des Schweißens ein Rand (28, 58) einer der Seitenflächen (14) und ein Rand (30, 60) der Querstruktur (12, 16) derart positioniert werden, dass sie eine Öffnung (32, 56) definieren, wobei die Öffnung (32, 56) einen Zugang von außerhalb des Wagenkastens (10) zu einem Kontaktpunkt zwischen der Querstruktur (12, 16) und der Seitenfläche (14) zum Herstellen der ersten Schweißnaht (24, 52) ermöglicht.

4. Verfahren nach einem beliebigen der vorhergehenden Ansprüche, bei dem der Abstand zwischen jedem freiliegenden Bereich (43, 71) und jeder komplementären Schweißnaht (38, 40, 66, 68) größer als 30 mm ist.

5. Verfahren nach einem beliebigen der vorhergehenden Ansprüche, umfassend einen Schritt der Montage mindestens eines Ausrüstungsteils, ausgewählt aus der Gruppe bestehend aus einer Glasscheibe, einem Verkleidungselement und einem elektrischen Kabel, einzeln an mindestens einer der beiden Seitenflächen (14) und der Querstruktur (12, 16), wobei der Schritt der Montage jedes Ausrüstungsteils vor dem Schritt des Schweißens ausgeführt wird.

6. Verfahren nach einem beliebigen der vorhergehenden Ansprüche, bei dem der Schritt des Schweißens automatisiert durchgeführt wird.

7. Verfahren nach einem beliebigen der vorhergehenden Ansprüche, bei dem während des Schritts des Bereitstellens ein Wagenoberteil (16) und ein Wagenunterteil (12) vorgesehen werden und wobei die Schritte des Aufbringens und des Schweißens zuerst auf das Wagenunterteil (12) und dann auf das Wagenoberteil (16) angewandt werden.

## Claims

1. A method for manufacturing a body (10) of a railway vehicle, comprising the steps of:
- providing two side faces (14) and a transverse structure selected from among an upper pavilion (16) and a body bottom (12);
- applying one definitive outer surface coating on both side faces (14) and the transverse structure (12, 16);
- welding the transverse structure (12, 16) to both side faces (14);
each welding of each side face (14) to the transverse structure (12, 16) comprising the following steps:
- making a first weld (24, 52) directly between the side face (14) and the transverse structure (12, 16),
- positioning an intercalating element (34, 62), having two edges, between the side face (14) and the transverse structure (12, 16), above the first weld (34, 62), and
- making two complementary welds (38, 40, 66, 68), on the one hand between the side face (14) and an edge of the intercalating element (34, 62) and on the other hand between the transverse structure (12, 16) and the other edge of the intercalating element (34, 62)
**characterized in that** the step of applying the definitive outer surface coating on both side faces (14) and the transverse structure (12, 16) isolated is carried out before the welding step,
the method comprising a step for adhesively bonding a trim element (42, 70) covering the two complementary welds (38, 40, 66, 68) and jutting out on either side of both complementary welds (38, 40, 66, 68), the trim element (42, 70) leaving two exposed areas (43, 71) on the outer faces (18), located on either side of the two complementary welds (38, 40, 66, 68).

2. The method according to claim 1, wherein the side faces (14) and the transverse structure (12, 16) have an inner face (17) and an outer face (18), the welding step being exclusively carried out from the side of the outer faces (18).

3. The method according to any of claims 1 and 2, wherein, during the welding step, an edge (28, 58) of one of the side faces (14) and an edge (30, 60) of the transverse structure (12, 16) are positioned so as to define an aperture (32, 56), the aperture (32, 56) allowing access from the outside of the body (10) to a contact point between the transverse structure (12, 16) and the side face (14) for making the first weld (24, 52).

4. The method according to any of the preceding claims, wherein the distance between each exposed area (43, 71) and each complementary weld (38, 40, 66, 68) is greater than 30 mm.

5. The method according to any of the preceding claims, comprising a step for assembling at least one piece of equipment selected from the group consisting in a window, a trim element, and an electric cable, on at least one of both side faces (14) and of the isolated transverse structure (12, 16), the step for assembling each piece of equipment being carried out before the welding step.

6. The method according to any of the preceding claims, wherein the welding step is carried out in an automated way.

7. The method according to any of the preceding claims, wherein during the provision step, an upper pavilion (16) and a body bottom (12) are provided and wherein the application and welding steps are applied first to the body bottom (12) and then to the upper pavilion (16).
